Europäisches Patentamt

European Patent Office

Office européen des brevets

(19)

(11) Numéro de publication : **0 004 246 B2**

(12) **NOUVEAU FASCICULE DE BREVET EUROPÉEN**

(45) Date de publication du nouveau fascicule du brevet : 15.06.88

(51) Int. Cl.⁴ : **G 03 B 11/00**

(21) Numéro de dépôt : 79400165.1

(22) Date de dépôt : 13.03.79

(54) **Dispositif porte-accessoires pour objectifs d'appareils de prise de vues et pare-soleil destiné à être utilisé avec ce dispositif.**

(30) Priorité : 14.03.78 FR 7807309

(43) Date de publication de la demande : 19.09.79 Bulletin 79/19

(45) Mention de la délivrance du brevet : 09.06.82 Bulletin 82/23

(45) Mention de la décision concernant l'opposition : 15.06.88 Bulletin 88/24

(84) Etats contractants désignés : BE CH DE GB IT LU NL SE

(56) Documents cités :
DE-C-   362 598
DE-C-   967 274
FR-A-   883 929
FR-A- 1 203 564
GB-A-   340 836
GB-A-   756 821
GB-A- 1 043 372
JP-A-45 032 290
JP-A-56 019 070
US-A- 3 614 196
US-A- 3 758 200
US-A- 3 840 883
US-A- 3 918 078
US-A- 4 053 910
Kodak "Filters for Black and White and Color Pictures" P. 1-9
Hasselblad, Mode d'emploi, "Parasoleil à soufflet"
Prospekt "Rolleiflex 4x4", S. 18
Prospekt : Curtis Combo, "An Image Control System For Single Lens Cameras"

(73) Titulaire : **Coquin, Jean-Claude**
**15, Rue Jean Bologne**
**F-75016 Paris (FR)**

(72) Inventeur : **Coquin, Jean-Claude**
**15, Rue Jean Bologne**
**F-75016 Paris (FR)**

(74) Mandataire : **Nony, Michel**
**Cabinet Nony 29, rue Cambacérès**
**F-75008 Paris (FR)**

EP 0 004 246 B2

## Description

La présente invention est relative à un dispositif porte-accessoires, notamment porte-filtres, pour un appareil de prise de vues tel qu'un appareil photographique ou une caméra.

Il est souvent nécessaire dans la prise de vues de disposer devant l'objectif un ou plusieurs filtres, notamment un filtre tournant polarisant et/ou un ou plusieurs filtres colorés ainsi qu'un élément supplémentaire tel que par exemple un pare-soleil ou analogue.

Compte-tenu des différences de diamètre d'objectif des nombreux types d'appareils de prise de vues disponibles dans le commerce, il est actuellement nécessaire pour les fabricants d'accessoires photographiques tels que notamment les filtres de prévoir, pour chacun des diamètres possibles d'objectifs, toute la gamme des filtres nécessaires.

Cela augmente considérablement les coûts de fabrication de ces accessoires et entraîne l'obligation, pour les fabricants, grossistes et revendeurs de disposer d'un stock important composé de très nombreuses pièces différentes pour satisfaire aux besoins de la clientèle.

Le brevet français 1 203 564 propose une solution visant à réduire le nombre de pièces en stock.

Ce brevet décrit un dispositif porte-accessoires comportant un corps muni d'un filetage externe pour son vissage sur un objectif d'appareil de prises de vues, une cavité dans ledit corps pour recevoir un filtre et des moyens pour immobiliser ledit filtre dans ledit logement.

Ce dispositif présente cependant l'inconvénient de nécessiter un corps porte-filtre pour chaque dimension d'objectif.

Le brevet cité mentionnant ainsi que pour une gamme classique d'objectifs il est nécessaire de disposer de onze corps différents.

Ce dispositif présente en outre l'inconvénient de ne pas permettre de mouvement relatif du filtre par rapport à l'objectif.

Le document US-A-3 758 200 (D10) décrit un dispositif selon le préambule de la revendication 1 ayant pour but, la fixation d'un porte-filtre gélatine sur un objectif. Le dispositif prévu dans ce document présente toutefois l'inconvénient de présenter un grand nombre de pièces tout en ne pouvant supporter qu'un seul filtre. En outre, ce dispositif ne permet pas de déplacement en translation du filtre par rapport à l'objectif.

Le dispositif décrit dans le document KODAK « Filters for black and white and colour pictures » (D15) page 4, présente sensiblement les mêmes inconvénients. Ce dispositif, également prévu pour le support de filtres gélatine, comporte un corps en deux parties constitué d'un cadre de support et d'un anneau de maintien. Aucune translation du filtre par rapport à l'objectif n'est possible et une rotation elle-même n'est pas possible si l'anneau de maintien est serré sur l'anneau d'adaptation comme cela est le cas en fonctionnement normal.

Le document DE-A-362 598 (D1) ainsi que le prospectus « CURTIS COMBO « (D14) MATTE BOX-LENS SHADE décrivent par contre des porte-filtres permettant le support simultané de plusieurs filtres.

Ces deux dispositifs sont toutefois d'une grande complexité et ils ne permettent ni l'un ni l'autre la rotation indépendante de deux filtres montés dans le porte-filtre par rapport à l'objectif.

La présente invention se propose de réaliser un dispositif porte-accessoires facilement adaptable à tous les diamètres d'objectifs utilisés dans le commerce qui soit simple et économique et qui permette de recevoir divers accessoires tels que notamment des filtres et un pare-soleil en permettant les mouvements relatifs nécessaires de rotation et/ou de coulissement en translation des filtres par rapport à l'objectif.

La présente invention a pour objet, à titre de produit industriel nouveau, un dispositif porte-accessoire pour objectif d'appareil de prise de vue comportant un corps présentant une découpe centrale circulaire, des moyens de montage du corps sur l'objectif de l'appareil de prise de vue, comprenant une bague annulaire amovible présentant une collerette interne filetée extérieurement et faisant axialement saillie de ladite bague, ladite bague se vissant sur l'objectif et étant susceptible d'être mise en place dans un logement correspondant réalisé d'un côté dudit corps de façon à permettre un mouvement relatif de rotation dudit corps par rapport audit objectif, et des moyens pour recevoir un accessoire photographique, caractérisé par le fait que ledit corps est réalisé d'un seul tenant, que ledit logement comporte une gorge annulaire s'étendant autour de la majeure partie de la découpe circulaire du corps, de dimension correspondant au diamètre externe de la bague, ledit logement étant agencé pour recevoir élastiquement ladite bague filetée, et que le corps présente sur son côté opposé au logement de la bague, au moins deux paires de gorges réalisées en regard dans les faces internes de deux flasques sensiblement parallèles, opposés, en déport vers l'extérieur perpendiculairement audit corps et permettant chacune de recevoir un accessoire photographique, notamment d'un filtre.

Dans un mode de réalisation particulier du dispositif selon l'invention, les gorges de l'une desdites paires sont disposées de façon à permettre la réception entre elles d'un filtre de forme circulaire tout en permettant la rotation relative de ce filtre par rapport audit corps, celui-ci comportant en outre des butées latérales empêchant le dégagement du filtre circulaire tournant du corps.

Les deux flasques opposés peuvent alors présenter chacun, outre les gorges de réception du filtre circulaire tournant, au moins une paire de gorges, et de préférence deux paires de gorges, pour la réception de filtres plans tout en permettant un déplacement coulissant en translation du ou des filtres plans par rapport audit corps.

On obtient ainsi trois possibilités de mouvement relatif à savoir, soit la rotation du corps par rapport à l'objectif, la rotation du filtre circulaire par rapport au corps et le coulissement du filtre plan par rapport au corps, soit la rotation du corps par rapport à l'objectif et les deux mouvements de coulissement en translation possibles des filtres plans par rapport au corps.

Dans une forme de réalisation particulière, l'un au moins des flancs de chacune des gorges de réception du filtre plan présente une certaine élasticité de façon à permettre un maintien du filtre dans les gorges correspondantes.

Le corps peut présenter par exemple une forme sensiblement hexagonale, lesdits flasques étant disposés selon deux côtés opposés du corps hexagonal.

Le dispositif selon l'invention, dans un mode de réalisation particulier, comprend sur le côté du corps comportant ladite gorge annulaire, une butée pour immobiliser latéralement la bague dans la gorge annulaire tout en permettant une rotation relative de la bague et du corps.

Les faces externes des flasques opposés du corps peuvent comporter chacune une gorge pour l'engagement par coulissement de languettes d'accrochage correspondant d'un élément supplémentaire, notamment un pare-soleil, susceptible d'être monté sur le dispositif.

L'invention a également pour objet un pare-soleil destiné à être utilisé avec le dispositif décrit ci-dessus, caractérisé par le fait qu'il comporte un boîtier creux, notamment de section carrée à bords arrondis, présentant une paire de languettes d'accrochage susceptibles de s'engager dans lesdites gorges.

On comprend qu'avec une telle réalisation, et avec un corps unique de dispositif il est possible de prévoir un jeu de telles bagues de montage dont le diamètre externe de chacune est identique et correspond à la dimension du logement, et dont le diamètre de la collerette interne filetée de chacune correspond à chaque dimension d'objectif disponible dans le commerce. On comprend que par un simple changement de la bague de montage il est possible d'adapter le dispositif selon l'invention à tous les diamètres d'objectifs.

D'autres avantages de l'invention apparaîtront à la lecture de la description suivante donnée à titre nullement limitatif d'un mode de réalisation particulier du dispositif de l'invention en se référant au dessin annexé dans lequel :

la figure 1 représente une vue en perspective éclatée du dispositif selon l'invention, d'un filtre tournant et d'un filtre plan,

la figure 2 est une vue en élévation du corps du dispositif selon l'invention vu du côté de montage sur l'objectif,

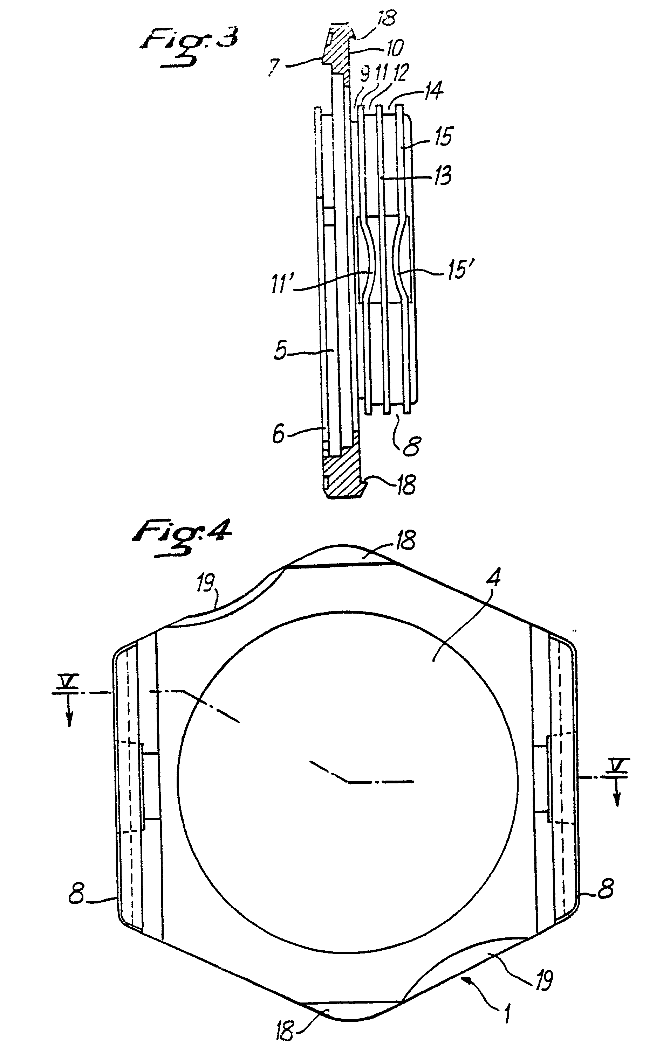

la figure 3 est une vue en coupe selon III-III de la figure 2,

la figure 4 est une vue en élévation du corps du dispositif selon l'invention du côté opposé au montage sur l'objectif,

la figure 5 est une vue en coupe selon V-V de la figure 4,

la figure 6 est une vue en bout partiellement en coupe d'un pare-soleil utilisable avec le dispositif selon l'invention,

la figure 7 est une vue en élévation frontale du pare-soleil représenté sur la figure 6.

Le dispositif selon l'invention se compose essentiellement, d'un corps 1 de faible épaisseur et de forme sensiblement hexagonale à coins arrondis et d'une bague intermédiaire de montage 2.

La bague intermédiaire de montage 2 du corps 1 du dispositif selon l'invention sur un objectif d'appareil de prise de vues comporte une collerette annulaire axiale 3 susceptible d'être vissée sur le filetage que présentent les objectifs d'appareils de prise de vues.

Le corps 1 du dispositif réalisé d'un seul tenant par moulage présente une découpe centrale circulaire 4 et sur l'une de ses faces une gorge 5 de forme annulaire s'étendant autour de la majeure partie de la découpe circulaire centrale 4 du corps, cette gorge étant définie dans la paroi extérieure 6 du corps.

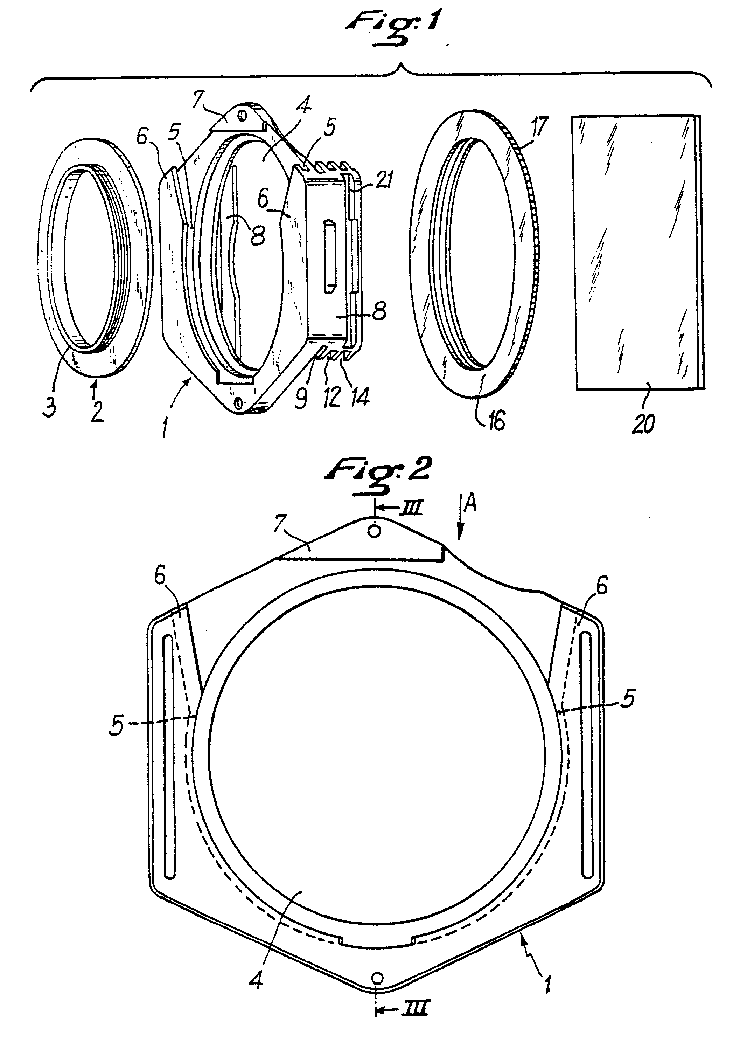

Le corps 1 comporte dans la zone d'introduction de la bague intermédiaire de montage 2 dans la gorge 5 une butée de forme sensiblement triangulaire 7 destinée à retenir la bague de montage 2 dans la gorge 5 du corps. Pour mettre en place la bague de montage 2 dans son logement du corps défini par la gorge annulaire 5 on introduit la bague 2 en la faisant coulisser dans le sens schématisé par la flèche A sur la figure 2 jusqu'à ce qu'elle vienne s'encliqueter derrière la butée 7, les dimensions respectives de la gorge 5 et de la bague intermédiaire annulaire 2 étant telles qu'une fois la bague 2 logée dans le corps tous les mouvements relatifs de rotation de la bague par rapport au corps sont permis.

La gorge 5 s'étend sur un peu plus d'un demi-cercle de manière à maintenir élastiquement la bague intermédiaire 2 qui y est introduite.

Le corps 1 du dispositif selon l'invention comporte en outre deux flasques 8 parallèles en regard sur deux côtés opposés du corps.

Chacun des flasques 8 comporte sur sa face interne une pluralité de gorges, au nombre de trois dans l'exemple représenté, ces gorges étant réalisées entre des nervures des flasques 8.

Ainsi chacun des flasques 8 comporte une gorge 9 définie entre une paroi 10 du corps et une nervure 11 du flasque, une seconde gorge 12 définie entre la nervure 11 et une nervure 13, et une troisième gorge 14 définie entre la nervure 13 et une nervure 15.

Comme on le voit sur le dessin la gorge 9 dans chacun des flasques 8 est plus fine et plus profonde que les gorges 12 et 14. Cette gorge 9 est destinée à recevoir un filtre circulaire représenté en 16 sur la figure 1, ce filtre 16 comportant une couronne périphérique annulaire, par exemple métallique moletée sur sa tranche 17.

Ce filtre circulaire 16 est inséré latéralement dans le corps 1 en s'engageant dans la fente 9 jusqu'à venir entre deux butées latérales 18, l'agencement étant tel que le filtre 16 inséré dans la gorge 9 peut tourner à volonté par rapport au corps 1. A cet effet le corps 1 peut avantageusement comporter des creusures 19 pour faciliter l'accès d'un doigt à la couronne moletée du filtre tournant 16.

En plus d'un filtre tournant 16 le dispositif peut recevoir un filtre plan 20, par exemple un filtre totalement ou partiellement coloré, ou encore travaillé se présentant sous la forme d'une plaquette plane quadrangulaire, ce filtre 20 étant susceptible d'être engagé par coulissement dans la fente 14 ménagée entre les nervures 13 et 15. Pour permettre un maintien par élasticité du filtre plan dans la gorge 14 la nervure 15 peut être avantageusement courbée dans sa partie centrale en 15' en direction de la nervure 13.

Si l'on ne met pas en place de filtre tournant il est possible de mettre en place dans le dispositif en plus d'un filtre plan dans la gorge 14 un second filtre plan dans la gorge 12, ce second filtre étant également maintenu par élasticité grâce à la partie centrale courbe 11' de la nervure 11.

On comprend que le ou les filtres plans mis en place dans le dispositif peuvent coulisser en translation à volonté en étant logés dans les gorges correspondantes 12 et respectivement 14 des deux flasques 8.

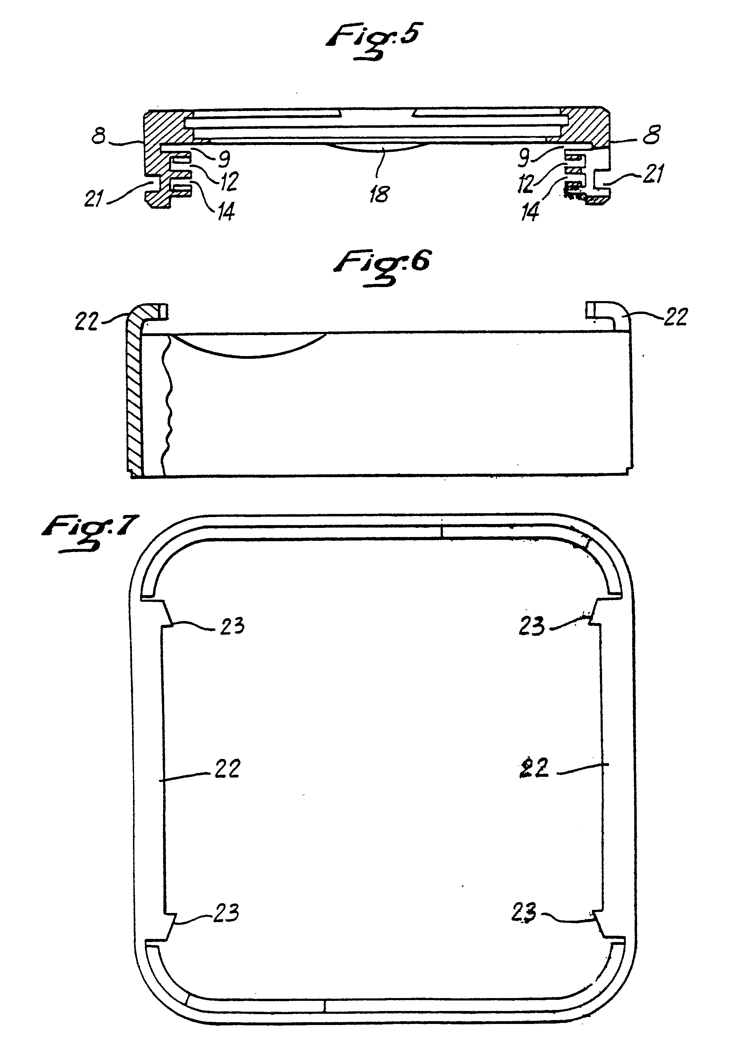

Ces flasques 8 présentent avantageusement dans leur face externe chacun une gorge 21 permettant l'insertion par coulissement d'un élément supplémentaire, tel que par exemple un pare-soleil représenté aux figures 6 et 7.

Ce pare-soleil se présente avantageusement sous la forme d'un boîtier creux, de forme sensiblement carrée à bords arrondis et comporte en déport vers l'intérieur depuis sa face arrière deux languettes recourbées 22 susceptibles de s'engager par coulissement dans les gorges 21 des faces externes des flasques 8 du corps 1. Les languettes 22 peuvent présenter à leurs extrémités des becs 23 pour permettre l'immobilisation du pare-soleil sur le corps 1 du dispositif selon l'invention.

On comprend qu'ainsi grâce au dispositif porte-accessoires selon l'invention il est possible par un choix convenable de la bague de montage, de mettre en place sur tout objectif d'appareil de prise de vues un ensemble d'accessoires. Ainsi l'on peut mettre simultanément en place un filtre tournant, un filtre plan et un pare-soleil, ou bien deux filtres plans et un pare-soleil.

Le corps 1 du dispositif selon l'invention est de préférence réalisé d'un seul tenant par moulage d'une matière plastique susceptible de conférer au corps une certaine élasticité pour la mise en place et l'enlèvement tant de la bague de montage que du filtre tournant. Dans l'exemple de réalisation l'on a utilisé la matière plastique connue sous la marque de « Delrin ».

## Revendications

1. Dispositif porte-accessoires pour objectif d'appareil de prise de vues comportant un corps présentant une découpe centrale circulaire, des moyens de montage du corps sur l'objectif de l'appareil de prise de vues comprenant une bague annulaire amovible présentant une collerette interne filetée extérieurement et faisant axialement saillie de ladite bague, ladite bague se vissant sur l'objectif et étant susceptible d'être mise en place dans un logement correspondant réalisé d'un côté dudit corps de façon à permettre un mouvement relatif de rotation dudit corps par rapport audit objectif, et des moyens pour recevoir un accessoire photographique, caractérisé par le fait que ledit corps (1) est réalisé d'un seul tenant, que ledit logement comprend une gorge annulaire (5) s'étendant autour de la majeure partie de la découpe circulaire du corps, de dimension correspondant au diamètre externe de la bague (2), ledit logement étant agencé pour recevoir élastiquement ladite bague filetée, et que le corps présente, sur son côté opposé au logement de la bague, au moins deux paires de gorges (9, 12, 14) réalisées en regard dans les faces internes de deux flasques (8) sensiblement parallèles, opposés, en déport vers l'extérieur perpendiculairement audit corps (1) et permettant chacune de recevoir un accessoire photographique, notamment un filtre (16, 20).

2. Dispositif selon la revendication 1, caractérisé par le fait que les gorges (9) de l'une desdites paires sont disposées de façon à permettre la réception entre elles d'un filtre (16) de forme circulaire tout en permettant la rotation relative de ce filtre par rapport audit corps, celui-ci comportant en outre des butées latérales (18) empêchant le dégagement du filtre circulaire tournant du corps.

3. Dispositif selon la revendication 2, caractérisé par le fait que les deux flasques (8) opposés présentent chacun, outre les gorges (9) de réception du filtre circulaire tournant, au moins une paire de gorges, et de préférence deux paires de gorges (12, 14), pour la réception de filtres plans (20) tout en permettant un déplacement coulissant en translation du ou des filtres plans par rapport audit corps.

4. Dispositif selon la revendication 3, caractérisé par le fait que l'un au moins des flancs de chacune des gorges (12, 14) de réception de filtre plan présente une certaine élasticité de façon à permettre un maintien du filtre (20) dans les gorges correspondantes.

5. Dispositif selon l'une quelconque des revendications précédentes, caractérisé par le fait que le corps (1) présente une forme sensiblement hexagonale, lesdits flasques (8) étant disposés selon deux côtés opposés du corps hexagonal.

6. Dispositif selon la revendication 1, caractérisé par le fait qu'il comprend sur le côté du corps comportant ladite gorge annulaire (5) une butée (7) pour immobiliser latéralement la bague dans la gorge annulaire (5) tout en permettant une rotation relative de la bague et du corps.

7. Dispositif selon l'une quelconque des revendications précédentes, caractérisé par le fait que les faces externes des flasques (8) opposés du corps (1) comportent chacune une gorge (21) pour l'engagement par coulissement de languettes d'accrochage (22) correspondantes d'un élément supplémentaire, notamment un pare-soleil, susceptible d'être monté sur le dispositif.

8. Pare-soleil destiné à être utilisé avec le dispositif selon la revendication 7, caractérisé par le fait qu'il comporte un boîtier creux, notamment de section carrée à bords arrondis, présentant une paire de languettes d'accrochage (22) susceptibles de s'engager dans lesdites gorges (21).

## Claims

1. An accessory-carrier device for the objective of a camera comprising a body having a central circular aperture, means for mounting the body on the objective of the camera comprising a movable annular ring having an externally threaded inner collar extending axially from said ring, said ring being screwable on to the objective and being capable of being mounted in a corresponding seating provided on a side of said body so as to allow relative rotational movement of said body relative to said objective, and means for receiving a photographic accessory, characterised in that said body (1) is formed as a single member, said seating comprises an annular groove (5) extending about the major part of the circular aperture of the body, of dimension corresponding to the external diameter of the ring (2), said seating being adapted to receive said threaded ring elastically, and in that the body has, on its side opposite the seating of the ring, at least two pairs of grooves (9, 12, 14) formed facing each other in the internal surfaces of two opposed, substantially parallel flanges (8), extending towards the exterior perpendicularly to said body (1) and each allowing receipt of a photographic accessory, notably a filter (16, 20).

2. A device according to claim 1, characterised in that the grooves (9) of one of said pairs are arranged to allow reception between them of a filter (16) of circular shape while allowing rotation of this filter relative to said body, the latter also comprising lateral abutment surfaces (18) preventing release of the rotatable circular filter from the body.

3. A device according to claim 2, characterised in that the two opposite flanges (8) both have, in addition to the grooves (9) for receiving a rotatable circular filter, at least on pair of grooves, preferably two pairs of grooves (12, 14) for receiving planar filters (20) while allowing sliding displacement in translation of the planar filter or filters relative to said body.

4. A device according to claim 3, characterised in that at least one of the sides of each of the grooves (12, 14) for receiving a planar filter has a certain elasticity so as to allow retention of a filter (20) in the corresponding grooves.

5. A device according to any one of the preceding claims, characterised in that the body (1) is of substantially hexagonal shape, said flanges (8) being arranged on two opposite sides of the hexagonal body.

6. A device according to claim 1, characterised in that it comprises on the side of the body comprising said annular groove (5) an abutment surface (7) to laterally immobilise the ring in the annular groove (5) while allowing rotation of the ring relative to the body.

7. A device according to any one of the preceding claims, characterised in that the external surfaces of the opposed flanges (8) of the body (1) each comprise a groove (21) for sliding engagement of corresponding anchoring tabs (22) of an additional element, notably a sun-shield, capable of being mounted on the device.

8. A sun-shield intended to be used with a device according to claim 7, characterised in that it comprises a hollow enclosure, notably of square section having rounded edges, having a pair of anchoring tabs (22) capable of engaging in said grooves (21).

## Patentansprüche

1. Zubehörteil-Vorsatz für Objektive von Bildaufnahmegeräte, bestehend aus einem Halter mir einer zentralen kreisförmigen Öffnung, wobei Mittel für die Montage des Halters an das Objektiv des Aufnahmegerätes vorgesehen sind, die einen abnehmbaren Ring mit einem kragenförmigen Außengewindeansatz aufweisen, der axial am Ring vorspringt, wobei der Ring auf das Objektiv aufschraubbar ist und in eine entsprechende Ausnehmung, die auf der einen Seite des Halters vorgesehen ist, so eingebracht werden kann, daß er eine Relativdrehung des Halters in Bezug auf das Objektiv ermöglicht, und wobei Mittel vorhanden sind, um ein photographisches Zubehörteil aufzunehmen, dadurch gekennzeichnet, daß der Halter (1) aus einem Stück besteht, daß die Ausnehmung aus einer ringförmigen Auskehlung (5) besteht, die sich um den größeren Teil der kreisförmigen Öffnung des Halters erstreckt und die Abmessungen der Auskehlung dem Außendurchmesser des Ringes (2) entsprechen, daß die Ausnehmung dazu dient, den mit Gewinde versehenen Ring elastisch aufzunehmen, und daß der Halter auf der Seite, die der Ausnehmung für den Ring gegenüberliegt, wenigstens zwei Paare von Rillen (9, 12, 14) aufweist, die in den Innenflächen von zwei im wesentlichen parallelen entgegengesetzt zueinander verlaufenden Flanschen (8) vorgesehen sind, die nach außen senkrecht vom Halter (1) abstehen und die Aufnahme von photographischen Zubehörteilen, insbesondere eines Filters (16, 20), ermöglichen.

2. Zubehörteil-Vorsatz nach Anspruch 1, dadurch gekennzeichnet, daß die Rillen (9) eines der genannten Paare so angeordnet sind, daß sie die Aufnahme eines kreisförmigen Filters (16) gestatten und die Relativdrehung dieses Filters in Bezug auf den Halter ermöglichen, wobei dieser im übrigen seitliche Anschläge (18) aufweist, welche das Herausfallen des kreisförmigen im Halter drehbaren Filters verhindern.

3. Zubehörteil-Vorsatz nach Anspruch 2, dadurch gekennzeichnet, daß die beiden gegenüberliegenden Flansche (8) jeder außer den Rillen (9) für die Aufnahme des kreisförmigen drehbaren Filters wenigstens ein Paar, vorzugsweise aber zwei Paare von Rillen (12, 14) für die Aufnahme von ebenen Filtern (20) aufweisen, die in den zugeordneten Rillenpaaren translatorisch zum Halter verschiebbar sind.

4. Zubehörteil-Vorsatz nach Anspruch 3, dadurch gekennzeichnet, daß wenigstens eine der Flanken jeder der Rillen (12, 14) zur Aufnahme der ebenen Filter eine gewisse Elastizität aufweist, um ein Festklemmen des Filters (20) in den zugeordneten Rillen zu ermöglichen.

5. Zubehörteil-Vorsatz nach einem der vorhergehenden Ansprüche, dadurch gekennzeichnet, daß der Halter (1) eine im wesentlichen hexagonale Form aufweist, wobei die Flanschen (8) an zwei entgegengesetzt zueinander verlaufenden Seiten des hexagonalen Halters vorgesehen sind.

6. Zubehörteil-Vorsatz nach Anspruch 1, dadurch gekennzeichnet, daß er auf der Seite des Halters, der die ringförmige Auskehlung (5) trägt, einen Anschlag (7) aufweist, um den Ring in der ringförmigen Auskehlung (5) unter Ermöglichung der Relativdrehung zwischen Ring und Halter in seiner seitlichen Bewegbarkeit zu sperren.

7. Zubehörteil-Vorsatz nach einem der vorhergehenden Ansprüche, dadurch gekennzeichnet, daß die äußeren Flächen der entgegengesetzt verlaufenden Flansche (8) des Halters (1) je eine Rille (21) für das Einschieben von abgebogenen Haltezungen (22) aufweisen, die sich an einem anderen Zubehörteil, z. B. einer Blende befinden, das gleichfalls auf den Vorsatz aufmontierbar ist.

8. Blende zur Verwendung für einen Zubehörteil-Vorsatz nach Anspruch 7, dadurch gekennzeichnet, daß sie einen Hohlbehälter von insbesondere rechteckiger Formgebung mit abgerundeten Kanten aufweist, der mit einem Haltezungenpaar (22) versehen ist, welches in die Rillen oder Nuten (21) eingreift.

0 004 246

*Fig.1*

*Fig.2*

1

0 004 246

Fig:3

18
10
7
9 11 12
14
15
13

11'
15'

5

6

8

18

Fig:4

18
19
4

V

8
8

19
1

18

2

*Fig.5*

8

9

12

14

21

18

21

9

12

14

8

*Fig.6*

22

22

*Fig.7*

23

23

22

22

23

23